# EUROPÄISCHE PATENTSCHRIFT

(11) **EP 1 838 979 B1**
(45) Veröffentlichungstag und Bekanntmachung des Hinweises auf die Patenterteilung: **23.01.2013**
(21) Anmeldenummer: 05815261.2
(22) Anmeldetag: 02.12.2005
(51) Int. Cl.: F16H 61/04, F16H 61/70

(54) **VERFAHREN ZUR SCHALTSTEUERUNG EINES AUTOMATISIERTEN SCHALTGETRIEBES**
SHIFT CONTROL METHOD FOR AN AUTOMATIC GEARBOX
PROCEDE DE COMMANDE DE COMMUTATION D'UNE TRANSMISSION AUTOMATISEE

(30) Priorität: 19.01.2005 DE 102005002496
(43) Veröffentlichungstag der Anmeldung: 03.10.2007
(73) Patentinhaber: ZF FRIEDRICHSHAFEN Aktiengesellschaft, 88038 Friedrichshafen (DE)
(72) Erfinder: GRÖNER, Wolfgang, 88048 Friedrichshafen (DE); VESENJAK, Andelko, 88074 Meckenbeuren (DE); HAFEN, Thomas, 88682 Salem (DE)
(86) Internationale Anmeldenummer: PCT/EP2005/012874
(87) Internationale Veröffentlichungsnummer: WO 2006/076944

(56) Entgegenhaltungen:
- EP-A- 0 512 708
- DE-A1- 10 152 857
- DE-A1- 19 726 567
- DE-A1- 19 754 726

## Beschreibung

Die Erfindung betrifft ein Verfahren zur Schaltsteuerung eines als Bereichsgruppengetriebe ausgebildeten automatisierten Schaltgetriebes, mit einem mehrstufigen Hauptgetriebe, welches eingangsseitig über eine steuerbare Anfahr- und Schaltkupplung mit einem Antriebsmotor verbindbar ist und eine mit dessen Eingangswelle in Verbindung stehende Getriebebremse aufweist, sowie mit einer dem Hauptgetriebe antriebstechnisch nachgeordneten mindestens zweistufigen Bereichsgruppe, wobei eine Bereichswechselschaltung mit einem Wechsel der Übersetzungsstufe sowohl in dem Hauptgetriebe als auch in der Bereichsgruppe durchgeführt wird, wie bekannt aus der DE 101 52 857 A.

Besonders für den Einsatz in Nutzfahrzeugen, wie LKWs und Omnibussen, sind Schaltgetriebe mit hoher Spreizung und enger Übersetzungsabstufung erforderlich. Um die daraus resultierende hohe Anzahl von Gangstufen mit vertretbaren Kosten sowie mit möglichst geringem Gewicht und Bauraumbedarf realisieren zu können, wird häufig ein sogenanntes Bereichsgruppengetriebe verwendet, das aus einem mehrstufigen Hauptgetriebe und einer diesem nachgeschalteten, zumeist zweistufigen Bereichsgruppe gebildet wird.

Das Hauptgetriebe selbst weist dabei eine relativ geringe Spreizung von 2 bis 3 auf und ist zumeist als Stirnradgetriebe in Vorgelegebauart ausgebildet. Die Schaltkupplungen des Hauptgetriebes können synchronisiert oder unsynchronisiert realisiert sein, d.h. als Reibringsynchronkupplungen oder als Klauenkupplungen ausgebildet sein. Die Schaltung, also der Wechsel der Übersetzungsstufe, des Hauptgetriebes kann prinzipiell manuell oder automatisiert erfolgen. Vorliegend wird allerdings von einer automatisierten Schaltung des Hauptgetriebes ausgegangen, wozu dieses auch mit einer mit der betreffenden Eingangswelle in Verbindung stehenden Getriebebremse versehen ist, wie sie beispielsweise aus der DE 102 10 177 A1 bekannt ist.

Die Bereichsgruppe weist dagegen eine relativ große Spreizung im Bereich von etwa 2,5 bis 5 auf. Daraus resultieren eine Spreizung des Gesamtgetriebes von 5 bis 15, und bei vier Übersetzungsstufen des Hauptgetriebes sowie zwei Übersetzungsstufen der Bereichsgruppe (eine L-Übersetzungsstufe für eine langsame Ganggruppe und eine S-Übersetzungsstufe für eine schnelle Ganggruppe) insgesamt 8 Gangstufen. Die kleinen bzw. langsamen Gangstufen des Gesamtgetriebes werden durch die Übersetzungsstufen des Hauptgetriebes bei eingelegter L-Übersetzungsstufe der Bereichsgruppe, und die großen bzw. schnellen Gangstufen durch dieselben Übersetzungsstufen des Hauptgetriebes bei eingelegter S-Übersetzungsstufe der Bereichsgruppe gebildet.

Die Bereichsgruppe ist beispielsweise als einfacher Planetenradsatz ausgebildet, deren Sonnenrad mit der Eingangswelle und deren Planetenträger mit der Ausgangswelle des Gesamtgetriebes verbunden ist. Bei einer derart ausgebildeten Bereichsgruppe wird die L-Übersetzungsstufe durch eine Arretierung des Hohlrads am Getriebegehäuse und die S-Übersetzungsstufe durch eine Kopplung des Hohlrads mit dem Planetenträger geschaltet. Alternativ dazu kann die Bereichsgruppe aber auch als Stirnradgetriebe in Vorgelegebauart ausgebildet sein.

Bei einer Bereichswechselschaltung wird sowohl in dem Hauptgetriebe als auch in der nachgeschalteten Bereichsgruppe jeweils ein Wechsel der Übersetzungsstufe durchgeführt. Bei einer Bereichswechsel-Hochschaltung wird in der Bereichsgruppe von der L-Übersetzungsstufe in die S-Übersetzungsstufe hochgeschaltet, während in dem Hauptgetriebe von der größten, zumeist in Form eines Direktgangs ausgebildeten größten Übersetzungsstufe in die kleinste Übersetzungsstufe zurückgeschaltet wird. Umgekehrt wird bei einer Bereichswechsel-Rückschaltung in der Bereichsgruppe von der S-Übersetzungsstufe in die L-Übersetzungsstufe zurückgeschaltet und in dem Hauptgetriebe von der kleinsten Übersetzungsstufe in die größte Übersetzungsstufe hochgeschaltet. Abweichend davon ist bei einer Bereichswechselschaltung auch das Überspringen einer Übersetzungsstufe innerhalb des Hauptgetriebes möglich. Da eine fast gleichzeitige Schaltung des Hauptgetriebes und der Bereichsgruppe manuell schwierig zu bewerkstelligen ist, werden die Bereichsgruppen bekannter Bereichsgruppengetriebe üblicherweise unter Verwendung synchronisierter Schaltkupplungen automatisiert geschaltet.

Der zeitliche Ablauf einer Bereichswechselschaltung kann entsprechend der jeweiligen Zielsetzung unterschiedlich gestaltet sein. Üblicherweise wird bei einer Bereichswechselschaltung nach dem Öffnen der Anfahr- und Schaltkupplung zunächst die bisherige Übersetzungsstufe des Hauptgetriebes ausgelegt, danach die bisherige Übersetzungsstufe der Bereichsgruppe ausgelegt, dann die neue Übersetzungsstufe der Bereichsgruppe synchronisiert und nachfolgend eingelegt, daraufhin die neue Übersetzungsstufe des Hauptgetriebes synchronisiert und nachfolgend eingelegt, und abschließend die Anfahr- und Schaltkupplung wieder geschlossen.

Bei diesem z.B. auch aus der DE 197 54 726 A1 bekannten Schaltungsablauf werden die jeweils durch eine Verzögerung oder eine Beschleunigung zu synchronisierenden Trägheitsmomente der jeweiligen Eingangswellen und der mit diesen verbundenen Getriebeteile sowie damit die erforderlichen Schaltkräfte minimiert. Nachteilig daran ist jedoch, dass eine Beschleunigung dieses Schaltungsablaufs, insbesondere innerhalb der Bereichsgruppe, nur mit einem erheblichen apparativen Aufwand möglich ist. So müssten zur Beschleunigung des Schaltvorgangs in der Bereichsgruppe Synchronisiermittel, wie eine Getriebebremse zur Verzögerung und ein Hilfsantrieb zur Beschleunigung der Eingangswelle der Bereichsgruppe, vorgesehen werden, welches aber aus Platz- und Kostengründen, wenn überhaupt nur für Spezialfahrzeuge in Frage kommt.

Bei einem anderen Schaltungsablauf gemäß der DE 100 36 511 A1 und der DE 101 52 857 A1 ist vorgesehen, dass jeweils vor der Schaltung des Hauptgetriebes die bisherige Übersetzungsstufe der Bereichsgruppe ausgelegt und nach der Schaltung des Hauptgetriebes die neue Übersetzungsstufe der Bereichsgruppe synchronisiert und eingelegt wird. Hierdurch kann zwar die Synchronisierung des Hauptgetriebes bei geschlossener Anfahr- und Schaltkupplung durch eine entsprechende Ansteuerung des Antriebsmotors erfolgen, die Synchronisierung der nachgeschalteten Bereichsgruppe wird dadurch aber aufgrund der größeren Drehzahldifferenz und der höheren mit der Eingangswelle der Bereichsgruppe verbundenen Trägheitsmomente nachteilig erschwert und verzögert.

Vor diesem Hintergrund liegt der vorliegenden Erfindung die Aufgabe zugrunde, ein Verfahren zur Schaltsteuerung eines automatisierten Bereichsgruppengetriebes der eingangs genannten Art vorzuschlagen, mit dem eine Bereichswechselschaltung ohne großen apparativen Aufwand schneller als bisher möglich durchgeführt werden kann.

Die Lösung dieser Aufgabe ergibt sich aus den Merkmalen des Hauptanspruchs, während vorteilhafte Ausgestaltungen des Verfahrens in den Unteransprüchen 2 bis 9 angegeben sind.

Der Erfindung liegt die Erkenntnis zugrunde, dass bei einem Bereichsgruppengetriebe, das aus einem automatisierten Hauptgetriebe und einer nachgeschalteten, ebenfalls automatisierten Bereichsgruppe gebildet ist, fremdkraftgesteuerte Mittel, die zur Synchronisierung des Hauptgetriebes vorgesehen sind, bei geschlossenem Hauptgetriebe, also bei einer eingelegten Übersetzungsstufe des Hauptgetriebes, vorteilhaft auch zur Synchronisierung der nachgeschalteten Bereichsgruppe genutzt werden können.

Demzufolge ist zur Beschleunigung des Schaltungsablaufs erfindungsgemäß vorgesehen, dass die Schaltschritte der Bereichswechselschaltung in der Reihenfolge
- Reduzierung des Motormomentes und Öffnen der Anfahr- und Schaltkupplung,
- Auslegen der bisherigen Übersetzungsstufe der Bereichsgruppe,
- Synchronisieren der neuen Übersetzungsstufe der Bereichsgruppe,
- Auslegen der bisherigen Übersetzungsstufe des Hauptgetriebes,
- Einlegen der neuen Übersetzungsstufe der Bereichsgruppe,
- Synchronisieren der neuen Übersetzungsstufe des Hauptgetriebes,
- Einlegen der neuen Übersetzungsstufe des Hauptgetriebes und
- Schließen der Anfahr- und Schaltkupplung sowie Erhöhen des Motormomentes
durchgeführt werden, wobei das Synchronisieren der neuen Übersetzungsstufen jeweils durch eine fremdkraftgesteuerte Einwirkung auf die Eingangswelle des Hauptgetriebes erfolgt.

Hierdurch wird vorteilhaft erreicht, dass ohne irgend ein zusätzliches Bauteil die Bereichsgruppe automatisiert synchronisiert bzw. die Synchronisierung der Bereichsgruppe unterstützt und somit beschleunigt wird, wodurch der gesamte Schaltungsablauf verkürzt wird. Das erfindungsgemäße Verfahren kann bei Verwendung einer synchronisierten Schaltkupplung in der Bereichsgruppe zudem dazu genutzt werden, diese Schaltkupplung schwächer zu dimensionieren und damit kompakter und billiger zu gestalten. Alternativ dazu ermöglicht das erfindungsgemäße Verfahren aber auch die Verwendung einer unsynchronisierten Schaltkupplung in der Bereichsgruppe.

Entsprechend ist bei einer Bereichswechsel-Hochschaltung vorgesehen, dass die Synchronisierung der neuen Übersetzungsstufe der Bereichsgruppe über eine Verzögerung der Eingangswelle des Hauptgetriebes durch ein zumindest teilweises Schließen der Getriebebremse erfolgt, die üblicherweise zur Synchronisierung der neuen Übersetzungsstufe des Hauptgetriebes bei einer Hochschaltung innerhalb des Hauptgetriebes genutzt wird.

Bei Verwendung einer synchronisierten Schaltkupplung in der Bereichsgruppe kann mittels der Getriebebremse bei der Hochschaltung der Bereichsgruppe innerhalb der Bereichswechsel-Hochschaltung zunächst eine Grobsynchronisierung in Form einer Verzögerung der Eingangswelle der Bereichsgruppe bis in die Nähe der Synchrondrehzahl, und anschließend mittels der Synchroneinrichtung der Schaltkupplung der Bereichsgruppe eine Feinsynchronisierung erfolgen. Hierdurch wird der Schaltvorgang wesentlich beschleunigt. Andererseits kann die Synchroneinrichtung der Schaltkupplung unter diesen Einsatzbedingungen wie schon erwähnt auch schwächer dimensioniert werden.

Bei Verwendung einer unsynchronisierten Schaltkupplung in der Bereichsgruppe kann dagegen die gesamte Synchronisierung in Form einer Verzögerung der Eingangswelle der Bereichsgruppe bis zum Erreichen der Synchrondrehzahl bzw. einer durch die Schaltkupplung überbrückbaren kleinen Drehzahldifferenz mittels der Getriebebremse des Hauptgetriebes erfolgen.

Nach der Synchronisierung der neuen Übersetzungsstufe der Bereichsgruppe wird die Getriebebremse zur Erzielung eines lastfreien Auslegens der bisherigen Übersetzungsstufe des Hauptgetriebes und eines lastfreien Einlegens der neuen Übersetzungsstufe der Bereichsgruppe zweckmäßig vor dem Auslegen der bisherigen Übersetzungsstufe des Hauptgetriebes vollständig geöffnet.

Bei der Bereichswechsel-Hochschaltung erfolgt die nachfolgende Synchronisierung der neuen Übersetzungsstufe des Hauptgetriebes dann in an sich bekannter Weise durch eine Beschleunigung der Eingangswelle des Hauptgetriebes durch ein zumindest teilweises Schließen der Anfahr- und Schaltkupplung.

In ähnlicher Weise ist bei einer Bereichswechsel-Rückschaltung vorgesehen, dass die Synchronisierung der neuen Übersetzungsstufe der Bereichsgruppe durch eine Beschleunigung der Eingangswelle des Hauptgetriebes mittels des Antriebsmotors durch ein zumindest teilweises Schließen der Anfahr- und Schaltkupplung erfolgt, die auch zur Synchronisierung der neuen Übersetzungsstufe des Hauptgetriebes bei einer Rückschaltung innerhalb des Hauptgetriebes genutzt werden kann.

Bei Verwendung einer synchronisierten Schaltkupplung in der Bereichsgruppe kann zunächst eine Grobsynchronisierung in Form einer Beschleunigung der Eingangswelle der Bereichsgruppe bis in die Nähe der Synchrondrehzahl mittels der Anfahr- und Schaltkupplung, und anschließend zur Überbrückung der restlichen Drehzahldifferenz eine Feinsynchronisierung mittels der Synchroneinrichtung der Schaltkupplung der Bereichsgruppe erfolgen.

Bei Verwendung einer unsynchronisierten Schaltkupplung in der Bereichsgruppe wird dagegen zweckmäßig die gesamte Synchronisierung in Form einer Beschleunigung der Eingangswelle der Bereichsgruppe bis zum Erreichen der Synchrondrehzahl bzw. einer durch die Schaltkupplung überbrückbaren kleinen Drehzahldifferenz mittels der Anfahr- und Schaltkupplung durchgeführt.

Nach der Synchronisierung der neuen Übersetzungsstufe der Bereichsgruppe wird die Anfahr- und Schaltkupplung zur Erzielung eines lastfreien Auslegens der bisherigen Übersetzungsstufe des Hauptgetriebes und eines lastfreien Einlegens der neuen Übersetzungsstufe der Bereichsgruppe zweckmäßig vor dem Auslegen der bisherigen Übersetzungsstufe des Hauptgetriebes vollständig geöffnet.

Bei der Bereichswechsel-Rückschaltung erfolgt die anschließende Synchronisierung der neuen Übersetzungsstufe des Hauptgetriebes in bekannter Weise durch eine Verzögerung der Eingangswelle des Hauptgetriebes durch ein zumindest teilweises Schließen der hierzu vorgesehenen Getriebebremse.

Zur Verdeutlichung der Erfindung sind der Beschreibung drei Figuren zur Erläuterung von zwei Ausführungsbeispielen des erfindungsgemäßen Verfahrens beigefügt. In diesen zeigt
- Fig. 1: den schematischen Aufbau eines verfahrensgemäß betreibbaren Bereichsgruppengetriebes,
- Fig. 2: den Drehzahlverlauf einer erfindungsgemäßen Bereichswechsel-Hochschaltung und
- Fig. 3: den Drehzahlverlauf einer erfindungsgemäßen Bereichswechsel-Rückschaltung.

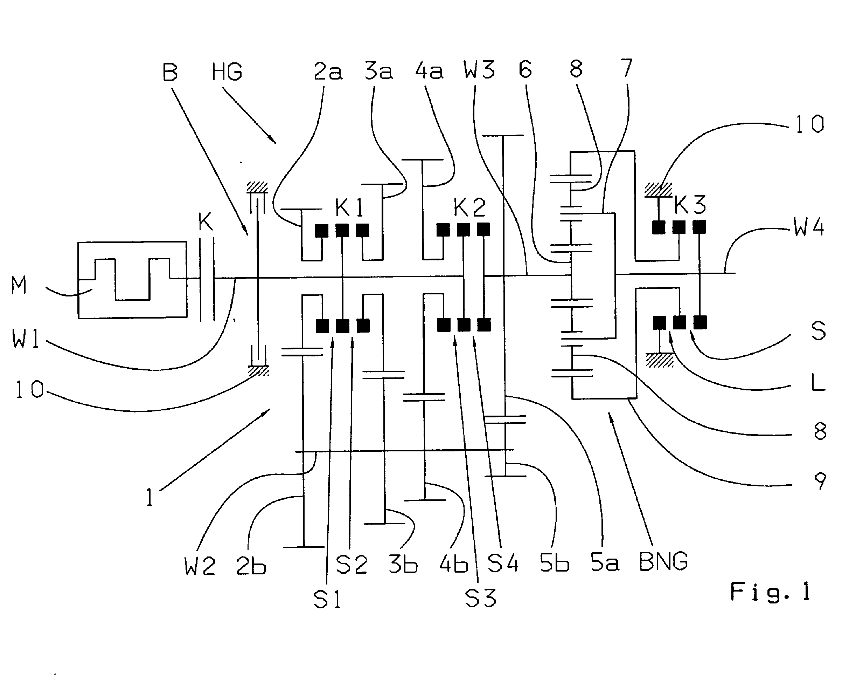

Ein automatisiertes Schaltgetriebe gemäß Fig. 1 ist als ein Bereichsgruppengetriebe 1 mit einem Hauptgetriebe HG und einer diesem nachgeschalteten Bereichsgruppe BNG ausgebildet. Das Hauptgetriebe HG steht mit seiner Eingangswelle W1 über eine steuerbare Anfahr- und Schaltkupplung K mit einem als Verbrennungskolbenmotor ausgebildeten Antriebsmotor M in Verbindung. Des weiteren weist das Hauptgetriebe HG an seiner Eingangswelle W1 eine Getriebebremse B auf.

Das Hauptgetriebe HG ist vorliegend als ein vierstufiges Stirnradgetriebe in Vorgelegebauart ausgebildet und weist neben der Eingangswelle W1 eine Vorgelegewelle W2, eine Ausgangswelle W3 sowie zwei auf der Eingangswelle angeordnete Schaltkupplungen K1, K2 auf. Drei Zahnradpaare 2a, 2b; 3a, 3b; 4a, 4b sind jeweils mit einem Losrad 2a, 3a, 4a auf der Eingangswelle W1 und mit jeweils einem Festrad 2b, 3b, 4b auf der Vorgelegewelle W2 angeordnet. Davon weist das erste Zahnradpaar 2a, 2b ein großes Übersetzungsverhältnis > 1, das zweite Zahnradpaar 3a, 3b ein mittleres Übersetzungsverhältnis > 1, und das dritte Zahnradpaar 4a, 4b ein kleines Übersetzungsverhältnis > 1 auf. Ein viertes Zahnradpaar 5a, 5b besteht aus einem mit der Vorgelegewelle W2 verbundenen Festrad 5b sowie einem mit der Ausgangswelle W3 verbundenen Festrad 5a, und weist zwischen der Vorgelegewelle W2 und der Ausgangswelle W3 ein Übersetzungsverhältnis > 1 auf.

Die Schaltkupplungen K1, K2 weisen jeweils neben einer Neutralstellung, in der jeweils keines der benachbarten Zahnräder mit der Eingangswelle W1 verbunden ist, zwei Schaltstellungen auf. In der Schaltstellung S1 der ersten Schaltkupplung K1 ist das Losrad 2a des ersten Zahnradpaars 2a, 2b drehfest mit der Eingangswelle W1 gekoppelt und damit die erste Übersetzungsstufe S1 des Hauptgetriebes HG eingelegt. Der Kraftfluss erfolgt in diesem Fall von der Eingangswelle W1 über das erste Zahnradpaar 2a, 2b, die Vorgelegewelle W2 und das vierte Zahnradpaar 5a, 5b in die Ausgangswelle W3.

In der Schaltstellung S2 der ersten Schaltkupplung K1 ist das Losrad 3a des zweiten Zahnradpaars 3a, 3b drehfest mit der Eingangswelle W1 verbunden, so dass dann die zweite Übersetzungsstufe S2 des Hauptgetriebes HG eingelegt ist und der Kraftfluss über das zweite Zahnradpaar 3a, 3b erfolgt.

In gleicher Weise ist in der Schaltstellung S3 der zweiten Schaltkupplung K2 die dritte Übersetzungsstufe S3 des Hauptgetriebes HG eingelegt, und der Kraftfluss erfolgt von der Eingangswelle W1 über das dritte Zahnradpaar 4a, 4b, die Vorgelegewelle W2 und das vierte Zahnradpaar 5a, 5b in die Ausgangswelle W3.

In der Schaltstellung S4 der zweiten Schaltkupplung K2 ist die Eingangswelle W1 dagegen unmittelbar mit der Ausgangswelle W3 gekoppelt, wodurch die vierte Übersetzungsstufe S4 des Hauptgetriebes HG mit dem Übersetzungsverhältnis i = 1 gebildet ist.

Über die Getriebebremse B kann die Eingangswelle W1 des Hauptgetriebes HG gegenüber dem Getriebegehäuse 10 abgebremst werden, welches bei automatisierten Hochschaltungen innerhalb des Hauptgetriebes HG zur Synchronisierung bzw. zur Unterstützung der Synchronisierung der betreffenden Schaltkupplungen K1, K2 genutzt wird.

Die nachgeschaltete Bereichsgruppe BNG ist vorliegend als ein einfacher Planetenradsatz mit einem Sonnenrad 6, einem mehrere Planetenräder 8 tragenden Planetenträger 7 und einem Hohlrad 9 ausgebildet. Das Sonnenrad 6 steht fest mit der Eingangswelle W3 der Bereichsgruppe BNG in Verbindung, die starr mit der Ausgangswelle W3 des Hauptgetriebes HG gekoppelt ist und daher in Fig. 1 identisch wie diese bezeichnet ist. Der Planetenträger 7 steht fest mit der Ausgangswelle W4 der Bereichsgruppe BNG in Verbindung. Das Hohlrad 9 ist drehfest mit dem beweglichen Teil einer dritten Schaltkupplung K3 verbunden, die neben einer Neutralstellung, in der keine Verbindung des Hohlrads 9 zu einem anderen Bauteil vorliegt, die Schaltstellungen L (für langsame Gruppe) und S (für schnelle Gruppe) aufweist.

In der Schaltstellung L der Schaltkupplung K3 ist das Hohlrad 9 über ein entsprechendes Kupplungsteil gegenüber dem Getriebegehäuse 10 drehfest arretiert. Hierdurch rollen die von dem Sonnenrad 6 angetriebenen Planetenräder 8 auf der Innenverzahnung des feststehenden Hohlrads 9 ab. Demzufolge dreht sich der Planetenträger 7 und die mit diesem verbundene Ausgangswelle W4 im Verhältnis von etwa 1 zu 2,5 bis 1 zu 5 langsamer als die Eingangswelle W3. Das wirksame Übersetzungsverhältnis zwischen der Eingangswelle W3 und der Ausgangswelle W4 liegt somit im Bereich von i = 2,5 bis i = 5 und wird nachfolgend beispielhaft mit i = 3,5 angenommen.

In der Schaltstellung S der Schaltkupplung K3 ist das Hohlrad 9 dagegen drehfest mit der Ausgangswelle W4 und dem mit dieser in Verbindung stehenden Planetenträger 7 gekoppelt, so dass die Planetenräder 8 gegenüber dem Hohlrad 9 blockiert sind und der gesamte Planetenradsatz starr mit der Drehzahl des Sonnenrads 6 umläuft. Das wirksame Übersetzungsverhältnis zwischen der Eingangswelle W3 und der Ausgangswelle W4 ist dann i = 1.

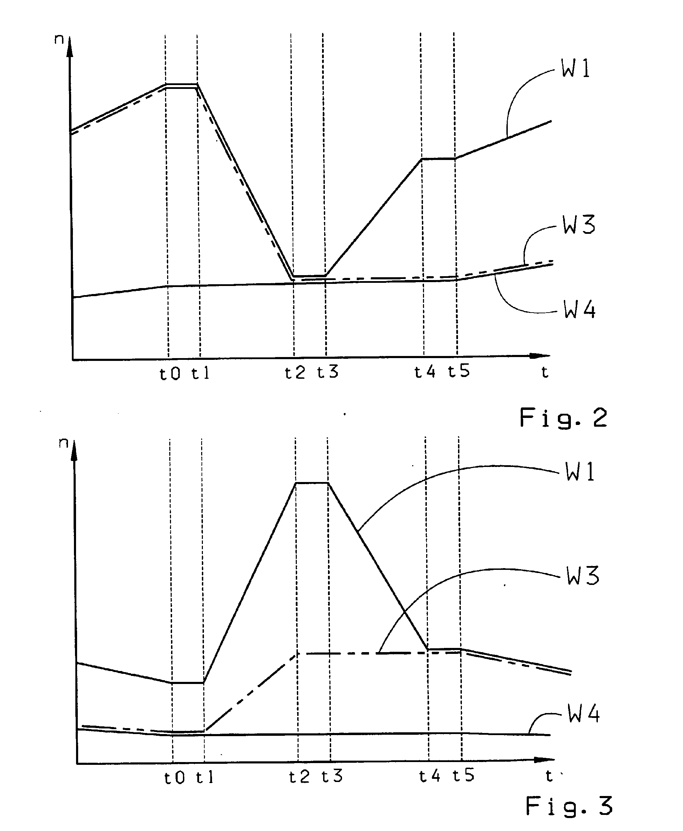

Nachfolgend wird unter Zugrundelegung des Bereichsgruppengetriebes gemäß Fig. 1 anhand des Diagramms von Fig. 2 der erfindungsgemäße Ablauf einer Bereichswechsel-Hochschaltung und anhand des Diagramms gemäß Fig. 3 der erfindungsgemäße Ablauf einer Bereichswechsel-Rückschaltung näher erläutert.

Eine Bereichswechsel-Hochschaltung umfasst eine Hochschaltung innerhalb der Bereichsgruppe BNG, vorliegend von der Übersetzungsstufe L in die Übersetzungsstufe S, und eine Rückschaltung innerhalb des Hauptgetriebes HG, vorliegend von der vierten Übersetzungsstufe S4 in die erste Übersetzungsstufe S1. In Fig. 2 sind nun für den Zeitraum dieses Schaltvorgangs die Verläufe der Drehzahlen n der Getriebewellen W1, W3, und W4 über der Zeit t dargestellt. Ausgangslage des Schaltvorgangs ist eine Beschleunigungsphase des betreffenden Kraftfahrzeugs. Demzufolge steigen die Drehzahlen n der Getriebewellen W1, W3, W4 an. Dabei drehen sich die Eingangswelle W1 des Hauptgetriebes HG und die Eingangswelle W3 der Bereichsgruppe BNG gleich schnell, da die im Hauptgetriebe HG eingelegte alte Übersetzungsstufe S4 die direkte Übersetzungsstufe mit dem Übersetzungsverhältnis i = 1 ist.

Beide Getriebewellen W1 und W3 drehen um den Faktor 3,5 schneller als die Ausgangswelle W4 der Bereichsgruppe BNG drehen, da in dieser die Übersetzungsstufe L mit dem angenommenen Übersetzungsverhältnis i = 3,5 eingelegt ist. Da die Drehzahl der Eingangswelle W1, die wegen der geschlossenen Anfahr- und Schaltkupplung K gleich der Motordrehzahl des Antriebsmotors M ist, einen vorgegebenen oberen Grenzwert erreicht, muss hochgeschaltet werden.

Die Bereichswechsel-Hochschaltung beginnt zum Zeitpunkt t0 mit dem Öffnen der Anfahr- und Schaltkupplung K und der gleichzeitigen Reduzierung des Motormomentes des Antriebsmotors M. Unmittelbar nachfolgend wird die alte Übersetzungsstufe L der Bereichsgruppe BNG durch eine Schaltung der dritten Schaltkupplung K3 in die Neutralstellung zum Zeitpunkt t1 ausgelegt. Zwischen den Zeitpunkten t1 und t2 wird die neue Übersetzungsstufe S der Bereichsgruppe BNG durch ein Abbremsen der Eingangswelle W1 des Hauptgetriebes HG durch ein zumindest teilweises Schließen der Getriebebremse B synchronisiert. Mit Erreichen der Synchrondrehzahl oder einer vorgegebenen kleinen Drehzahldifferenz an der dritten Schaltkupplung K3 wird im Zeitpunkt t2 die alte Übersetzungsstufe S4 des Hauptgetriebes HG durch eine Schaltung der zweiten Schaltkupplung K2 in die Neutralstellung ausgelegt.

Anschließend wird zum Zeitpunkt t3 die neue Übersetzungsstufe S der Bereichsgruppe BNG lastfrei durch eine Schaltung der dritten Schaltkupplung K3 in die Schaltstellung S eingelegt. Zwischen den Zeitpunkten t2 und t3 wird die Getriebebremse B wieder vollständig geöffnet. Anschließend erfolgt zwischen den Zeitpunkten t3 und t4 die Synchronisierung der neuen Übersetzungsstufe S1 des Hauptgetriebes HG mittels des Antriebsmotors M durch ein zumindest teilweises Schließen der Anfahr- und Schaltkupplung K Mit Erreichen der Synchrondrehzahl oder einer vorgegebenen kleinen Drehzahldifferenz an der ersten Schaltkupplung K1 wird im Zeitpunkt t4 die neue Übersetzungsstufe S1 des Hauptgetriebes HG durch eine Schaltung der ersten Schaltkupplung K1 in die Schaltstellung S1 eingelegt. Anschließend wird zum Zeitpunkt t5 die Anfahr- und Schaltkupplung K vollständig geschlossen, wodurch der Schaltvorgang beendet ist.

Ab dem Zeitpunkt t3 sind die Drehzahlen der Eingangswelle W3 und der Ausgangswelle W4 der Bereichsgruppe identisch, da beide Getriebewellen W3, W4 über die Schaltstellung S der dritten Schaltkupplung K3 praktisch direkt miteinander verbunden sind. Ab dem Zeitpunkt t4 besteht zwischen der Eingangswelle W1 des Hauptgetriebes HG und den Getriebewellen W3, W4 ein Drehzahlverhältnis entsprechend dem Übersetzungsverhältnis der ersten Übersetzungsstufe S1 des Hauptgetriebes, das vorliegend beispielhaft mit i = 2,5 angenommen wird. Auch wird aus dem Drehzahlverlauf der Eingangswelle W1 des Hauptgetriebes HG ersichtlich, dass diese zunächst zwischen den Zeitpunkten t1 und t2 zusammen mit der Eingangswelle W3 der Bereichsgruppe BNG abgebremst wird, um nachfolgend zwischen den Zeitpunkten t3 und t4 alleine wieder beschleunigt zu werden. Dieser Nachteil wird aber dadurch mehr als ausgeglichen, dass für die Synchronisierung der Bereichsgruppe BNG kein einziges zusätzliches Bauteil benötigt wird und der gesamte Schaltvorgang durch das erfindungsgemäße Verfahren deutlich beschleunigt abläuft.

Eine Bereichswechsel-Rückschaltung umfasst dagegen eine Rückschaltung innerhalb der Bereichsgruppe BNG, vorliegend von der Übersetzungsstufe S in die Übersetzungsstufe L, sowie eine Hochschaltung innerhalb des Hauptgetriebes HG, vorliegend von der ersten Übersetzungsstufe S1 in die vierte Übersetzungsstufe S4. In Fig. 3 sind analog zu Fig. 2 für den Zeitraum dieses Schaltvorgangs die Verläufe der Drehzahlen n der Getriebewellen W1, W3 und W4 über der Zeit t dargestellt. Ausgangslage des Schaltvorgangs ist eine Verzögerungsphase des betreffenden Kraftfahrzeugs. Demzufolge sinken die Drehzahlen n der Getriebewellen W1, W3, W4 ab. Dabei drehen sich die Eingangswelle W3 und die Ausgangswelle W4 der Bereichsgruppe BNG gleich schnell, da die in der Bereichsgruppe eingelegte bisherige Übersetzungsstufe S die direkte Übersetzungsstufe mit dem Übersetzungsverhältnis i = 1 ist. Die Eingangswelle W1 des Hauptgetriebes HG dreht um den Faktor 2,5 schneller als die Getriebewellen W3 und W4, da in dem Hauptgetriebe HG die erste Übersetzungsstufe S1 mit dem Übersetzungsverhältnis i = 2,5 eingelegt ist. Da die Drehzahl der Eingangswelle W1, die wegen der geschlossenen Anfahr- und Schaltkupplung K gleich der Motordrehzahl des Antriebsmotors M ist, einen vorgegebenen unteren Grenzwert erreicht, muss zurückgeschaltet werden.

Die Bereichswechsel-Rückschaltung beginnt zum Zeitpunkt t0 mit dem Öffnen der Anfahr- und Schaltkupplung K und der gleichzeitigen Reduzierung des Motormomentes des Antriebsmotors M. Unmittelbar nachfolgend wird die bisherige Übersetzungsstufe S der Bereichsgruppe BNG durch eine Schaltung der dritten Schaltkupplung K3 in die Neutralstellung zum Zeitpunkt t1 ausgelegt. Zwischen den Zeitpunkten t1 und t2 wird die neue Übersetzungsstufe L der Bereichsgruppe BNG durch ein Beschleunigen der Eingangswelle W1 des Hauptgetriebes HG mittels des Antriebsmotors M durch ein zumindest teilweises Schließen der Anfahr- und Schaltkupplung K synchronisiert. Mit Erreichen der Synchrondrehzahl oder einer vorgegebenen kleinen Drehzahldifferenz an der dritten Schaltkupplung K3 wird im Zeitpunkt t2 die bisherige Übersetzungsstufe S1 des Hauptgetriebes HG durch eine Schaltung der ersten Schaltkupplung K2 in die Neutralstellung ausgelegt. Anschließend wird zum Zeitpunkt t3 die neue Übersetzungsstufe L der Bereichsgruppe BNG lastfrei durch eine Schaltung der dritten Schaltkupplung K3 in die Schaltstellung L eingelegt. Zwischen den Zeitpunkten t2 und t3 wird die Anfahr- und Schaltkupplung K wieder vollständig geöffnet.

Anschließend erfolgt zwischen den Zeitpunkten t3 und t4 die Synchronisierung der neuen Übersetzungsstufe S4 des Hauptgetriebes HG durch ein zumindest teilweises Schließen der Getriebebremse B. Mit Erreichen der Synchrondrehzahl oder einer vorgegebenen kleinen Drehzahldifferenz an der zweiten Schaltkupplung K2 wird im Zeitpunkt t4 die neue Übersetzungsstufe S4 des Hauptgetriebes HG durch eine Schaltung der zweiten Schaltkupplung K2 in die Schaltstellung S4 eingelegt. Zwischen den Zeitpunkten t4 und t5 wird die Getriebebremse B vollständig geöffnet, bevor die Anfahr- und Schaltkupplung K im Zeitpunkt t5 wieder geschlossen wird, wodurch der Schaltvorgang beendet ist.

Ab dem Zeitpunkt t4 sind die Drehzahlen der Eingangswelle W1 des Hauptgetriebes HG und der Eingangswelle W3 der Bereichsgruppe BNG identisch, da beide Getriebewellen über die Schaltstellung S4 der zweiten Schaltkupplung K2 direkt miteinander verbunden sind. Ab dem Zeitpunkt t4 besteht zudem zwischen den Getriebewellen W1, W3 und der Ausgangswelle W4 der Bereichsgruppe BNG ein Drehzahlverhältnis entsprechend dem Übersetzungsverhältnis der Übersetzungsstufe S der Bereichsgruppe BNG von vorliegend i = 3,5.

Aus dem Drehzahlverlauf der Eingangswelle W1 des Hauptgetriebes HG wird wiederum ersichtlich, dass diese zunächst zwischen den Zeitpunkten t1 und t2 zusammen mit der Eingangswelle W3 der Bereichsgruppe BNG beschleunigt wird, um nachfolgend zwischen den Zeitpunkten t3 und t4 alleine wieder abgebremst zu werden. Dieser Nachteil ist aber relativ unbedeutend und wird in Kauf genommen, da der Schaltvorgang durch die fremdkraftgesteuerte Synchronisierung insgesamt stark beschleunigt wird und hierzu kein einziges zusätzliches Bauteil benötigt wird.

### Bezugszeichen

- 1: Bereichsgruppengetriebe
- 2a: Losrad (des ersten Zahnradpaars)
- 2b: Festrad (des ersten Zahnradpaars)
- 3a: Losrad (des zweiten Zahnradpaars)
- 3b: Festrad (des zweiten Zahnradpaars)
- 4a: Losrad (des dritten Zahnradpaars)
- 4b: Festrad (des dritten Zahnradpaars)
- 5a: Festrad (des vierten Zahnradpaars)
- 5b: Festrad (des vierten Zahnradpaars)
- 6: Sonnenrad
- 7: Planetenträger
- 8: Planetenrad
- 9: Hohlrad
- 10: Getriebegehäuse

- B: Getriebebremse
- BNG: (nachgeschaltete) Bereichsgruppe
- HG: Hauptgetriebe
- K: Anfahr- und Schaltkupplung
- K1: erste Schaltkupplung (des HG)
- K2: zweite Schaltkupplung (des HG)
- K3: dritte Schaltkupplung (des BNG)
- L: Schaltstellung (von K3), Übersetzungsstufe (der BNG)
- M: Antriebsmotor
- n: Drehzahl
- S: Schaltstellung (von K3), Übersetzungsstufe (der BNG)
- S1: Schaltstellung (von K1), erste Übersetzungsstufe (des HG)
- S2: Schaltstellung (von K1), zweite Übersetzungsstufe (des HG)
- S3: Schaltstellung (von K2), dritte Übersetzungsstufe (des HG)
- S4: Schaltstellung (von K2), vierte Übersetzungsstufe (des HG)
- t: Zeit
- t0: Zeitpunkt (des Schaltungsablaufs)
- t1: Zeitpunkt (des Schaltungsablaufs)
- t2: Zeitpunkt (des Schaltungsablaufs)
- t3: Zeitpunkt (des Schaltungsablaufs)
- t4: Zeitpunkt (des Schaltungsablaufs)
- t5: Zeitpunkt (des Schaltungsablaufs)
- W1: Eingangswelle (des HG)
- W2: Vorgelegewelle (des HG)
- W3: Ausgangswelle (des HG), Eingangswelle (der BNG)
- W4: Ausgangswelle (der BNG)

## Patentansprüche

1. Verfahren zur Schaltsteuerung eines als Bereichsgruppengetriebe (1) ausgebildeten automatisierten Schaltgetriebes, mit einem mehrstufigen Hauptgetriebe (HG), welches eingangsseitig über eine steuerbare Anfahr- und Schaltkupplung (K) mit einem Antriebsmotor (M) verbindbar ist, und eine mit dessen Eingangswelle (W1) in Verbindung stehende Getriebebremse (B) aufweist, sowie mit einer dem Hauptgetriebe (HG) antriebstechnisch nachgeordneten mindestens zweistufigen Bereichsgruppe (BNG), wobei eine Bereichswechselschaltung mit einem Wechsel der Übersetzungsstufe sowohl in dem Hauptgetriebe (HG) als auch in der Bereichsgruppe (BNG) durchgeführt wird, **Dadurch gekennzeichnet, dass** zur Beschleunigung des Schaltungsablaufs die Schaltschritte in der Reihenfolge
- Reduzierung des Motormomentes und Öffnen der Anfahr- und Schaltkupplung (K),
- Auslegen der bisherigen Übersetzungsstufe der Bereichsgruppe (BNG),
- Synchronisieren der neuen Übersetzungsstufe der Bereichsgruppe (BNG),
- Auslegen der bisherigen Übersetzungsstufe des Hauptgetriebes (HG),
- Einlegen der neuen Übersetzungsstufe der Bereichsgruppe (BNG),
- Synchronisieren der neuen Übersetzungsstufe des Hauptgetriebes (HG),
- Einlegen der neuen Übersetzungsstufe des Hauptgetriebes (HG) und
- Schließen der Anfahr- und Schaltkupplung (K) sowie Erhöhen des Motormomentes
durchgeführt werden, wobei das Synchronisieren der neuen Übersetzungsstufen jeweils durch eine fremdkraftgesteuerte Einwirkung auf die Eingangswelle (W1) des Hauptgetriebes (HG) erfolgt.

2. Verfahren nach Anspruch 1, **dadurch gekennzeichnet, dass** bei einer Bereichswechsel-Hochschaltung die Synchronisierung der neuen Übersetzungsstufe (S) der Bereichsgruppe (BNG) über eine Verzögerung der Eingangswelle (W1) des Hauptgetriebes (HG) durch ein zumindest teilweises Schließen der Getriebebremse (B) erfolgt.

3. Verfahren nach Anspruch 2, **dadurch gekennzeichnet, dass** bei Verwendung einer synchronisierten Schaltkupplung (K3) in der Bereichsgruppe (BNG) zunächst eine Grobsynchronisierung in Form einer Verzögerung der Eingangswelle (W3) der Bereichsgruppe (BNG) bis in die Nähe der Synchrondrehzahl mittels der Getriebebremse (B) des Hauptgetriebes (HG), und anschließend eine Feinsynchronisierung mittels der Synchroneinrichtung der Schaltkupplung (K3) der Bereichsgruppe (BNG) erfolgt.

4. Verfahren nach Anspruch 2, **dadurch gekennzeichnet, dass** bei Verwendung einer unsynchronisierten Schaltkupplung (K3) in der Bereichsgruppe (BNG) die gesamte Synchronisierung in Form einer Verzögerung der Eingangswelle (W3) der Bereichsgruppe (BNG) bis zum Erreichen der Synchrondrehzahl oder einer durch die Schaltkupplung (K3) überbrückbaren kleinen Drehzahldifferenz mittels der Getriebebremse (B) des Hauptgetriebes (HG) erfolgt.

5. Verfahren nach einem der Ansprüche 2 bis 4; **dadurch gekennzeichnet, dass** die Getriebebremse (B) vor dem Auslegen der bisherigen Übersetzungsstufe (S4) des Hauptgetriebes (HG) vollständig geöffnet wird.

6. Verfahren nach Anspruch 1, **dadurch gekennzeichnet, dass** bei einer Bereichswechsel-Rückschaltung die Synchronisierung der neuen Übersetzungsstufe (L) der Bereichsgruppe (BNG) durch eine Beschleunigung der Eingangswelle (W1) des Hauptgetriebes (HG) mittels des Antriebsmotors (M) durch ein zumindest teilweises Schließen der Anfahr- und Schaltkupplung (K) erfolgt.

7. Verfahren nach Anspruch 6, **dadurch gekennzeichnet, dass** bei Verwendung einer synchronisierten Schaltkupplung (K3) in der Bereichsgruppe (BNG) zunächst eine Grobsynchronisierung in Form einer Beschleunigung der Eingangswelle (W3) der Bereichsgruppe (BNG) bis in die Nähe der Synchrondrehzahl mittels der Anfahr- und Schaltkupplung (K), und anschließend eine Feinsynchronisierung mittels der Synchroneinrichtung der Schaltkupplung (K3) der Bereichsgruppe erfolgt.

8. Verfahren nach Anspruch 6, **dadurch gekennzeichnet, dass** bei Verwendung einer unsynchronisierten Schaltkupplung (K3) in der Bereichsgruppe (BNG) die gesamte Synchronisierung in Form einer Beschleunigung der Eingangswelle (W3) der Bereichsgruppe (BNG) bis zum Erreichen der Synchrondrehzahl oder einer durch die Schaltkupplung (K3) überbrückbaren kleinen Drehzahldifferenz mittels der Anfahr- und Schaltkupplung (K) erfolgt.

9. Verfahren nach einem der Ansprüche 6 bis 8, dadurch **gekenn zeichnet**, dass die Anfahr- und Schaltkupplung (K) vor dem Auslegen der bisherigen Übersetzungsstufe (S1) des Hauptgetriebes (HG) vollständig geöffnet wird.

## Claims

1. Shift control method for an automatic gearbox formed as a range group transmission (1), with a multi-stage main transmission (HG), which can be connected on the input side via a controllable starting and shift clutch (K) to a drive engine (M) and has a transmission brake (B) connected to its input shaft (W1), and with an at least two-stage range group (BNG) arranged downstream of the main transmission (HG) in terms of drive, wherein a range change shift with a change in the transmission ratio both in the main transmission (HG) and in the range group (BNG) is carried out, **characterized in that**, in order to speed up the shifting procedure, the shift steps are carried out in the following sequence:
- reducing the engine torque and opening the starting and shift clutch (K),
- disengaging the previous transmission ratio of the range group (BNG),
- synchronizing the new transmission ratio of the range group (BNG),
- disengaging the previous transmission ratio of the main transmission (HG),
- engaging the new transmission ratio of the range group (BNG),
- synchronizing the new transmission ratio of the main transmission (HG),
- engaging the new transmission ratio of the main transmission (HG) and
- closing the starting and shift clutch (K) and increasing the engine torque,
wherein the synchronization of the new transmission ratios is carried out in each case by an external force-controlled action on the input shaft (W1) of the main transmission (HG).

2. Method according to Claim 1, **characterized in that**, in the case of a range change upshift, the synchronization of the new transmission ratio (S) of the range group (BNG) is carried out via a slowing down of the input shaft (W1) of the main transmission (HG) by an at least partial closing of the transmission brake (B).

3. Method according to Claim 2, **characterized in that**, when using a synchronized shift clutch (K3) in the range group (BNG), at first a rough synchronization in the form of a slowing down of the input shaft (W3) of the range group (BNG) up to close to the synchronous rotational speed is carried out by means of the transmission brake (B) of the main transmission (HG) and subsequently a fine synchronization is carried out by means of the synchronization device of the shift clutch (K3) of the range group (BNG).

4. Method according to Claim 2, **characterized in that**, when using an unsynchronized shift clutch (K3) in the range group (BNG), the entire synchronization is carried out in the form of a slowing down of the input shaft (W3) of the range group (BNG) until reaching the synchronous rotational speed or a small rotational speed difference, which can be bridged by the shift clutch (K3), by means of the transmission brake (B) of the main transmission (HG).

5. Method according to one of Claims 2 to 4, **characterized in that** the transmission brake (B) is fully opened before disengagement of the previous transmission ratio (S4) of the main transmission (HG).

6. Method according to Claim 1, **characterized in that**, in the case of a range change downshift, the synchronization of the new transmission ratio (L) of the range group (BNG) is carried out by an acceleration of the input shaft (W1) of the main transmission (HG) by means of the drive engine (M) by an at least partial closure of the starting and shift clutch (K).

7. Method according to Claim 6, **characterized in that**, when using a synchronized shift clutch (K3) in the range group (BNG), at first a rough synchronization in the form of an acceleration of the input shaft (W3) of the range group (BNG) up to close to the synchronous rotational speed is carried out by means of the starting and shift clutch (K) and subsequently a fine synchronization is carried out by means of the synchronization device of the shift clutch (K3) of the range group.

8. Method according to Claim 6, **characterized in that**, when using an unsynchronized shift clutch (K3) in the range group (BNG), the entire synchronization is carried out in the form of an acceleration of the input shaft (W3) of the range group (BNG) until reaching the synchronous rotational speed or a small rotational speed difference, which can be bridged by the shift clutch (K3), by means of the starting and shift clutch (K).

9. Method according to one of Claims 6 to 8, **characterized in that** the starting and shift clutch (K) is fully opened before disengagement of the previous transmission ratio (S1) of the main transmission (HG).

## Revendications

1. Procédé de commande de changement de vitesse d'une boîte de vitesses automatisée prenant la forme d'une boîte de vitesses à groupes multiples (1), avec une boîte de vitesses principale à plusieurs niveaux (HG) pouvant être reliée côté entrée à un moteur d'entraînement (M) par le biais d'un embrayage de démarrage et de changement de vitesse (K) commandable et comportant un frein de boîte de vitesses (B) relié à son arbre d'entrée (W1), ainsi qu'avec un groupe multiple (BNG) comportant au moins deux niveaux, placé en aval, techniquement au niveau de l'entraînement en entrée, de la boîte de vitesses principale (HG), un changement de vitesse par changement de niveau étant réalisé avec un changement du niveau de démultiplication tant dans la boîte de vitesses principale (HG) que dans le groupe multiple (BNG), **caractérisé en ce que** les étapes de changement de vitesse se produisent dans l'ordre suivant pour accélérer le déroulement du changement de vitesse :
- réduction du couple du moteur et ouverture de l'embrayage de démarrage et de changement de vitesse (K) ;
- retrait du niveau de démultiplication précédent du groupe multiple (BNG) ;
- synchronisation du nouveau niveau de démultiplication du groupe multiple (BNG) ;
- retrait du niveau de démultiplication précédent de la boîte de vitesses principale (HG) ;
- passage du nouveau niveau de démultiplication du groupe multiple (BNG) ;
- synchronisation du nouveau niveau de démultiplication de la boîte de vitesses principale (HG) ;
- passage du nouveau niveau de démultiplication de la boîte de vitesses principale (HG) ; et
- fermeture de l'embrayage de démarrage et de changement de vitesse (K) ainsi qu'augmentation du couple du moteur ;
la synchronisation des nouveaux niveaux de démultiplication se produisant respectivement par le biais d'une action commandée par une force externe exercée sur l'arbre d'entrée (W1) de la boîte de vitesses principale (HG).

2. Procédé selon la revendication 1, **caractérisé en ce qu'**en cas de changement de vitesse à une vitesse supérieure par changement de niveau, la synchronisation du nouveau niveau de démultiplication (S) du groupe multiple (BNG) se produit par une fermeture au moins partielle du frein de boîte de vitesses (B) par le biais d'un ralentissement de l'arbre d'entrée (W1) de la boîte de vitesses principale (HG).

3. Procédé selon la revendication 2, **caractérisé en ce qu'**en cas d'utilisation d'un embrayage de changement de vitesse (K3) synchronisé dans le groupe multiple (BNG), une synchronisation grossière est d'abord réalisée sous la forme d'un ralentissement de l'arbre d'entrée (W3) du groupe multiple (BNG) jusqu'à ce que la vitesse de rotation synchrone soit approximativement atteinte à l'aide du frein de boîte de vitesses (B) de la boîte de vitesses principale (HG), suivie d'une synchronisation précise réalisée à l'aide du dispositif de synchronisation de l'embrayage de changement de vitesse (K3) du groupe multiple (BNG).

4. Procédé selon la revendication 2, **caractérisé en ce qu'**en cas d'utilisation d'un embrayage de changement de vitesse (K3) non synchronisé dans le groupe multiple (BNG), la synchronisation totale se produit sous la forme d'un ralentissement de l'arbre d'entrée (W3) du groupe multiple (BNG) jusqu'à atteindre la vitesse de rotation synchrone ou sous la forme d'une petite différence de vitesses de rotation pouvant être gérée par l'embrayage de changement de vitesse (K3) à l'aide du frein de boîte de vitesses (B) de la boîte de vitesses principale (HG).

5. Procédé selon l'une quelconque des revendications 2 à 4, **caractérisé en ce que** le frein de boîte de vitesses (B) est entièrement ouvert avant le retrait du niveau de démultiplication (S4) précédent de la boîte de vitesses principale (HG).

6. Procédé selon la revendication 1, **caractérisé en ce qu'**en cas de changement de vitesse à une vitesse inférieure par changement de niveau, la synchronisation du nouveau niveau de démultiplication (L) du groupe multiple (BNG) est réalisée par le biais d'une accélération de l'arbre d'entrée (W1) de la boîte de vitesses principale (HG) à l'aide du moteur d'entraînement (M), par le biais d'une fermeture au moins partielle de l'embrayage de démarrage et de changement de vitesse (K).

7. Procédé selon la revendication 6, **caractérisé en ce qu'**en cas d'utilisation d'un embrayage de changement de vitesse (K3) synchronisé dans le groupe multiple (BNG), une synchronisation grossière est d'abord réalisée sous la forme d'une accélération de l'arbre d'entrée (W3) du groupe multiple (BNG) jusqu'à atteindre approximativement la vitesse de rotation synchrone à l'aide de l'embrayage de démarrage et de changement de vitesse (K), suivie d'une synchronisation précise réalisée à l'aide du dispositif de synchronisation de l'embrayage de changement de vitesse (K3) du groupe multiple.

8. Procédé selon la revendication 6, **caractérisé en ce qu'**en cas d'utilisation d'un embrayage de changement de vitesse (K3) non synchronisé dans le groupe multiple (BNG), la synchronisation totale se produit sous la forme d'une accélération de l'arbre d'entrée (W3) du groupe multiple (BNG) jusqu'à atteindre la vitesse de rotation synchrone ou une petite différence de vitesses de rotation pouvant être gérée par l'embrayage de changement de vitesse (K3), à l'aide de l'embrayage de démarrage et de changement de vitesse (K).

9. Procédé selon l'une quelconque des revendications 6 à 8, **caractérisé en ce que** l'embrayage de démarrage et de changement de vitesse (K) est entièrement ouvert avant le retrait du niveau de démultiplication (S1) précédent de la boîte de vitesses principale (HG).
